# EUROPEAN PATENT SPECIFICATION

(11) **EP 3 961 222 B1**
(45) Date of publication and mention of the grant of the patent: **01.01.2025**
(21) Application number: 21192345.3
(22) Date of filing: 20.08.2021
(51) Int. Cl.: G01N 21/25, G01N 21/27, G01N 21/82

(54) **METHOD FOR DISPLAYING CALIBRATION CURVE AND ANALYZER**
VERFAHREN ZUR ANZEIGE EINER KALIBRIERUNGSKURVE UND ANALYSATOR
PROCÉDÉ D'AFFICHAGE DE COURBE D'ÉTALONNAGE ET ANALYSEUR

(30) Priority: 31.08.2020 JP 2020146068
(43) Date of publication of application: 02.03.2022
(73) Proprietor: SYSMEX CORPORATION, Kobe-shi Hyogo 651-0073 (JP)
(72) Inventor: Kato, Akihito, Kobe-shi, Hyogo, 651-0073 (JP); Kurono, Hiroshi, Kobe-shi, Hyogo, 651-0073 (JP)
(74) Representative: Hoffmann Eitle

(56) References cited:
- CN-A- 111 381 055
- JP-A- H 102 902
- US-A1- 2013 011 298
- US-A1- 2018 113 142

## Description

### CROSS REFERENCE TO RELATED APPLICATIONS

This application claims priority from prior Japanese Patent Application No. 2020-146068, filed on August 31, 2020, entitled "METHOD FOR DISPLAYING CALIBRATION CURVE AND ANALYZER".

### FIELD OF THE INVENTION

The present invention relates to a method for displaying calibration curve and an analyzer.

### BACKGROUND

In the field of clinical examination, specimen analyzers that measure the concentration and the like of a specific substance contained in a specimen such as plasma, serum, or urine are known. In such a specimen analyzer, a calibration curve is used in order to convert data that represents characteristics of the specimen to a concentration. For example, in a blood coagulation analyzer that analyzes coagulability of blood, the coagulation time representing the coagulation characteristic of plasma, which is a specimen, is measured, and the coagulation time is applied to a calibration curve, whereby the concentration of fibrinogen, a coagulation factor, or the like contained in the specimen is calculated.

International Publication WO2016/140017 discloses an automatic analyzer that can measure a standard sample that contains a component having a known concentration, and create a calibration curve on the basis of the relationship between the measurement value and the value of the known concentration. The automatic analyzer of International Publication WO2016/140017 can measure a patient specimen and a quality control sample, and calculate concentration data by using a calibration curve. The automatic analyzer of International Publication WO2016/140017 can display a quality control screen on which concentration data obtained by measuring a quality control sample is plotted in time series. An operator compares the concentration data obtained by measuring the quality control sample with an SD value and a mean value displayed on the quality control screen, thereby being able to confirm whether the automatic analyzer is accurately performing analysis.
Document JP H10 2902 A relates to an autoanalyzer in which when a prescribed key at a keyboard is pressed, a function selection menu is displayed, and a reagent-information function is selected. Then, an information-display-control function part displays reagent information. A reagent is installed on the basis of the information. A standard-sample residual amount or the like is confirmed in the same manner, and a working curve is decided. Then, an accuracy-control-item setting function is selected, and a standard sample is set. Then, an item change button is pressed, and measurement control information excluding the standard sample is selected out of the reagent information, standard sample information, working-curve information and accuracy-control information. Then, under the control of a control part, a measurement is started, and a measured result by a sample measuring means is displayed. At this time, even when any information is displayed, the measurement control information on a corresponding item is displayed by pressing the button.
Document US 2013/011298 A1 relates to a sample analyzer comprising: a measurement unit configured to perform, by using a reagent, a quality control measurement for measuring a quality control specimen; a display; and a controller configured to control the display to show reagent information for verifying a state of the reagent used in the quality control measurement, in conjunction with a result of the quality control measurement obtained by the measurement unit.

### SUMMARY OF THE INVENTION

In order to use, in specimen measurement, a calibration curve created on the basis of the measurement result of the standard sample, it is necessary to confirm validity of the calibration curve and to validate the calibration curve as a calibration curve usable in specimen measurement. When the validity of the calibration curve is to be confirmed, the operator confirms linearity of the calibration curve and the measurement result of the measured standard sample. Further, in order to confirm whether the concentration conversion is appropriately performed on the basis of the calibration curve, the operator may tentatively measure a quality control sample and compare a concentration value obtained by applying the measurement result to the calibration curve against a display value of the quality control sample, thereby confirming whether the calibration curve produces an appropriate analysis result. When having confirmed that the concentration value of the quality control sample is appropriate, the operator validates the calibration curve.

However, conventional automatic analyzers including that of International Publication WO2016/140017 are configured such that a screen on which a calibration curve is displayed and a screen on which a quality control result is displayed are separately provided. Therefore, in order to perform the work of confirming the calibration curve and the work of confirming the analysis result of the quality control sample, the operator has to go back and forth between the two screens.

The present invention has been made in consideration of the above-described circumstances. An object of the present invention is to provide a calibration curve display method and an analyzer that enable the work of confirming a calibration curve and the work of confirming the quality control result using the calibration curve to be efficiently performed.

The present inventors conducted various studies and have found that above object can be achieved by the present invention described below.

A method for displaying calibration curve according to an aspect of the present invention includes measuring a standard sample that contains a known concentration of a component, and creating a calibration curve before being validated, based on a measurement result of the standard sample and the known concentration of the component in the standard sample; measuring a quality control sample that contains a component having a known concentration, and obtaining a quality control result representing a concentration of the component in the quality control sample by converting a measurement result of the quality control sample into concentration based on the calibration curve before being validated; and displaying a screen including the calibration curve before being validated and the quality control result.

According to this aspect, the calibration curve before being validated and the quality control result are included in the same screen. Therefore, the operator need not perform the work of switching screens in order to confirm, on the basis of the quality control result, validity of the calibration curve before being validated. As a result, the work of confirming validity of the calibration curve can be made easy and efficient.

In another aspect of the invention, the screen includes a button for receiving an operation of validating a calibration curve. According to this aspect, after confirming validity of the calibration curve, the operator can validate the calibration curve without switching screens.

In another aspect of the invention, upon reception of an operation of validating a calibration curve, the calibration curve before being validated that has been displayed on the screen is registered as a calibration curve to be used in measurement of a specimen. According to this aspect, measurement of the specimen can be performed by using the validated calibration curve.

In another aspect, the screen further includes attribution information of the calibration curve before being validated. According to this aspect, without switching screens, the operator can confirm validity of the calibration curve after confirming the attribution information of the calibration curve.

In another aspect, the quality control result and the attribution information are displayed switchably in accordance with an operation by the operator. According to this aspect, while the display area of each piece of information displayed on the screen is increased, information useful for confirmation of the calibration curve can be provided in a single screen.

In another aspect, the screen includes an upper limit value and a lower limit value for the quality control result. According to this aspect, whether the quality control result is in an allowable range can be easily confirmed.

In another aspect, the screen includes a target value for the quality control result. According to this aspect, how much the quality control result is diverged from the target value can be easily confirmed.

In another aspect, the screen includes, in addition to the quality control result, a time series display of a plurality of quality control results obtained in the past. According to this aspect, whether the quality control result obtained by using the calibration curve before being validated has continuity with the trend of quality control results obtained by using past calibration curves can be easily confirmed.

In another aspect, the screen includes a graph of the calibration curve before being validated and the quality control result plotted on the graph. According to this aspect, the quality control result obtained by using the calibration curve before being validated can be confirmed on the graph. Therefore, information for confirming validity of the calibration curve can be intensively provided at a single place.

According to the present invention, the work of confirming a calibration curve and the work of confirming a quality control result using the calibration curve can be made easy and efficient.

### BRIEF DESCRIPTION OF THE DRAWINGS

FIG. 1 is a perspective view schematically showing an external configuration of a specimen analyzer according to an embodiment of the present invention;
FIG. 2 is a top view schematically showing configurations of a measurement unit and a transport unit;
FIG. 3 is a cross-sectional view schematically showing a configuration of a detector;
FIG. 4 is a block diagram showing a configuration of the measurement unit;
FIG. 5 is a block diagram showing a simplified configuration of the specimen analyzer;
FIG. 6 shows an example of a coagulation curve;
FIG. 7 shows an example of a calibration curve;
FIG. 8 is a flow chart showing an operation flow of the specimen analyzer;
FIG. 9 is a flow chart showing a flow of a specimen measurement analysis process;
FIG. 10 is a flow chart showing an operation flow of the measurement unit;
FIG. 11 is a flow chart showing a flow of calibration curve creation;
FIG. 12 is a flow chart showing a flow of calibration curve confirmation QC;
FIG. 13 shows an example of a calibration curve screen before calibration curve confirmation QC;
FIG. 14 shows a first example of a calibration curve screen;
FIG. 15 shows a second example of the calibration curve screen;
FIG. 16 shows a third example of the calibration curve screen;
FIG. 17 shows a fourth example of the calibration curve screen;
FIG. 18 shows an example in which a calibration curve and a QC result are displayed in separate windows; and
FIG. 19 shows an example in which a calibration curve and a QC result are displayed in separate computer screens.

### DETAILED DESCRIPTION OF THE PREFERRED EMBODIMENTS

Hereinafter, an embodiment according to the present disclosure will be described with reference to the drawings. In the drawings, components denoted by the same reference character are the same components, and description thereof is omitted as appropriate.

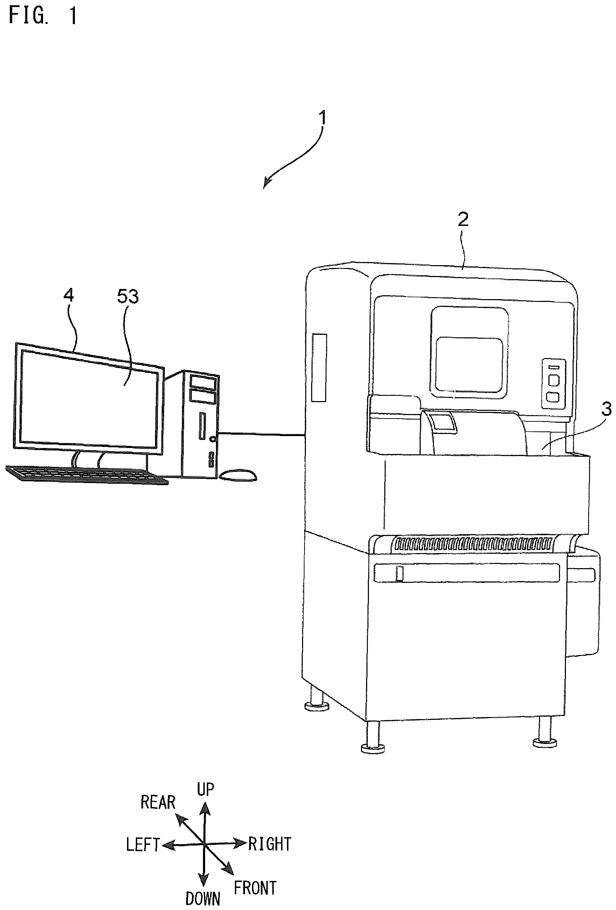

FIG. 1 is a perspective view schematically showing an external configuration of a specimen analyzer 1 according to an embodiment of the present disclosure. The hardware configuration of the specimen analyzer 1 of the present embodiment is disclosed in detail in US Patent Publication No. 2018-0267069. In the present specification, the apparatus configuration of the parts that are relevant to the present disclosure will be mainly described. The specimen analyzer 1 includes a measurement unit 2, a transport unit 3, and an analysis unit 4. The specimen analyzer 1 is a blood coagulation analyzer that analyzes coagulability of blood as a specimen. In the present specification, the directions of front, rear, left, right, up, and down are defined to be the directions of arrows shown in FIG. 1.

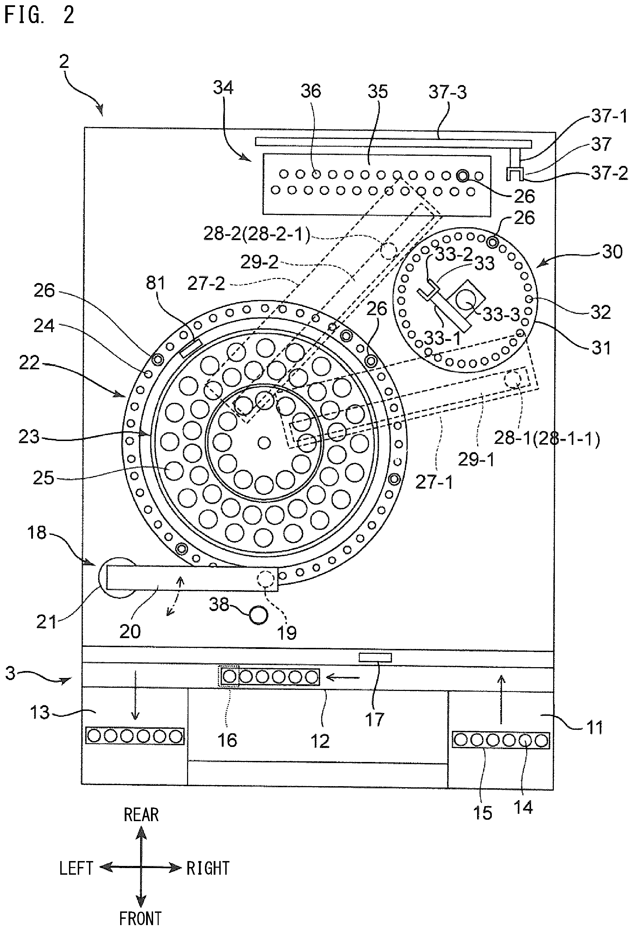

FIG. 2 is a top view schematically showing configurations of the measurement unit 2 and the transport unit 3. The transport unit 3 is disposed to the front of the measurement unit 2.

The transport unit 3 includes a rack setting part 11, a rack transporter 12, and a rack collection part 13. The rack setting part 11 is a region for disposing, on the specimen analyzer 1, a specimen rack 15 having set thereon one or a plurality of specimen containers 14 serving as analysis targets. A specimen rack 15 having placed thereon the specimen containers 14 each containing a specimen is set on the rack setting part 11 by an operator.

The rack transporter 12 is disposed between the rack setting part 11 and the rack collection part 13.

The rack collection part 13 is a region where a specimen rack 15 for which collection of each specimen has been completed and which has been transported by the rack transporter 12 is collected and retained. The rack collection part 13 is disposed on the downstream side of the rack transporter 12.

In the transport unit 3, the specimen rack 15 disposed in the rack setting part 11 is transported to the rack transporter 12, and each specimen container 14 is sequentially positioned at a specimen suction position 16. A specimen dispenser 18 collects, through suction, a specimen from a specimen container 14 positioned at the specimen suction position 16. In the transport unit 3, upon completion of collection of the specimen from one or a plurality of specimen containers 14, among the specimen containers 14 set in the specimen rack 15, for which measurement by the operator has been instructed, the specimen rack 15 is transported to the rack collection part 13 so as to be collected and retained therein.

In the measurement unit 2, a reagent is mixed with the specimen collected at the specimen suction position 16, thereby preparing a measurement sample, and this prepared measurement sample is measured. The measurement unit 2 includes the specimen dispenser 18, a reaction chamber holding part 22, a reagent storage part 23, a reagent dispenser 27-1, a reagent dispenser 27-2, a heating part 30, a sample measurement part 34, and a specimen information reading part 17.

The reagent storage part 23 stores a reagent to be used in preparation of a measurement sample. Specifically, the reagent storage part 23 is a disk-like member, in a plan view, in which a plurality of reagent holding holes 25 each for holding a reagent container that contains a reagent are formed at predetermined intervals in the circumferential direction. In the example shown in FIG. 2, three rows of the plurality of reagent holding holes 25 arranged in the circumferential direction are formed in the radial direction. The reagent storage part 23 is configured to be rotatable about the center thereof in the circumferential direction. The reagent stored in the reagent storage part 23 is a reagent for prothrombin time measurement, a reagent for fibrinogen measurement, or the like.

The reaction chamber holding part 22 holds a reaction chamber 26 for reacting a specimen and a reagent to prepare a measurement sample. The reaction chamber holding part 22 is an annular member, in a plan view, in which a plurality of holding holes 24 each for holding a reaction chamber 26 are formed at predetermined intervals in the circumferential direction. The reaction chamber holding part 22 is configured to be rotatable about the center thereof in the circumferential direction.

The specimen dispenser 18 collects, through suction, a specimen from a specimen container 14 positioned at the specimen suction position 16, and discharges the collected specimen into a reaction chamber 26 in the reaction chamber holding part 22. Specifically, the specimen dispenser 18 includes: a specimen suction nozzle 19 which suctions a specimen from a specimen container 14; an arm 20 which is a bar-like member whose one end portion has attached thereto the specimen suction nozzle 19 whose suction hole is oriented downward; and a drive mechanism 21 attached to the other end portion of the arm 20. The drive mechanism 21 can drive the arm 20 in the up-down direction and in the circumferential direction about the other end portion, used as the rotation axis, of the arm 20. The specimen dispenser 18 is disposed between the specimen suction position 16 and the reaction chamber holding part 22 so as to be able to collect a specimen at the specimen suction position 16 and to discharge the collected specimen into a reaction chamber 26 in the reaction chamber holding part 22.

A diluent holding hole 38 for holding a diluent container containing a predetermined diluent is formed between the specimen suction position 16 and the reaction chamber holding part 22. The specimen dispenser 18 can suction the diluent from the diluent container held in the diluent holding hole 38 and dispense the diluent into a reaction chamber 26. Therefore, in a calibration curve creation process described later, the specimen dispenser 18 can dispense a standard sample and a diluent into reaction chambers to prepare a plurality of measurement samples that have different dilution ratios, on the basis of the standard sample.

The heating part 30 is disposed to the right rear of the reaction chamber holding part 22 so as to be adjacent thereto. The heating part 30 heats a specimen contained in a reaction chamber 26 to a predetermined temperature (e.g., 37°C) appropriate for measurement. The heating part 30 includes a heating and holding part 31 and a transfer part 33. The heating and holding part 31 is a disk-like unit, in a plan view, in which a plurality of holding holes 32 each for holding a reaction chamber 26 are formed in the peripheral portion thereof at predetermined intervals in the circumferential direction. The heating and holding part 31 is configured to be rotatable about the center thereof. The heating and holding part 31 includes: a horizontal arm 33-1 expandable in the horizontal direction; a container catcher 33-2 provided at the leading end of the horizontal arm 33-1; and a rotation mechanism 33-3 which rotates the horizontal arm 33-1 about the proximal end thereof. The transfer part 33 causes the horizontal arm 33-1 to rotate and expand by means of the rotation mechanism 33-3, thereby causing the container catcher 33-2 to capture a reaction chamber 26 held in the reaction chamber holding part 22, and causes the horizontal arm 33-1 to contract, thereby transferring the reaction chamber 26 to the heating and holding part 31. The transfer part 33 causes the horizontal arm 33-1 to rotate and expand by means of the rotation mechanism 33-3, thereby transferring a reaction chamber 26 held by the container catcher 33-2, to a position 28-1-1 immediately below a reagent suction nozzle 28-1 of the reagent dispenser 27-1, and a position 28-2-1 immediately below a reagent suction nozzle 28-2 of the reagent dispenser 27-2.

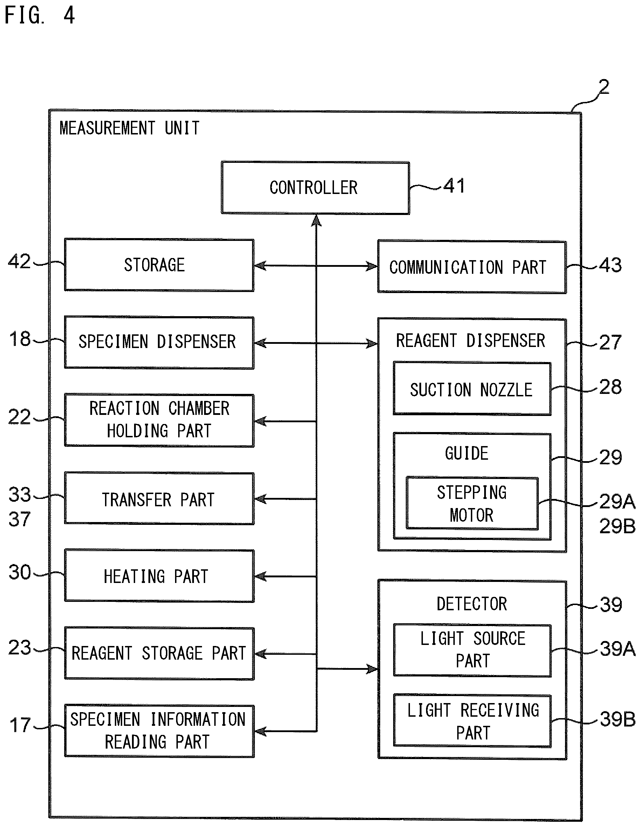

The reagent dispenser 27-1 is provided above the reagent storage part 23, the reaction chamber holding part 22, and the heating part 30. The reagent dispenser 27-1 collects, through suction, a predetermined amount of a reagent stored in the reagent storage part 23, and discharges the collected reagent into a reaction chamber 26 transferred to the position 28-1-1 immediately below the reagent suction nozzle 28-1. Accordingly, the specimen and the reagent are mixed together, whereby a sample is prepared. The reagent dispenser 27-1 includes the reagent suction nozzle 28-1 which suctions a reagent from a reagent container held in a reagent holding hole 25; and a guide 29-1 which is a bar-like member having attached thereto the reagent suction nozzle 28-1 whose suction hole is oriented downward. The reagent suction nozzle 28-1 can be moved in the horizontal direction between one end portion and the other end portion of the guide 29-1 by a stepping motor 29A (see FIG. 4). The reagent suction nozzle 28-1 can be moved in the up-down direction by a stepping motor 29B (see FIG. 4). The one end portion of the guide 29-1 is positioned above the reagent storage part 23, and the other end portion is positioned in the vicinity of the heating part 30. In order to allow collection of a reagent from the reagent storage part 23, the reagent dispenser 27-1 is disposed such that the guide 29-1 extends across from the vicinity of the center of the disk-like reagent storage part 23 to the peripheral portion thereof. Therefore, in a plan view, the reagent dispenser 27-1 overlaps the reaction chamber holding part 22 and the reagent storage part 23. Thus, in FIG. 2, the reagent dispenser 27-1 is indicated by a broken line. This also applies to the reagent dispenser 27-2.

Similarly, the reagent dispenser 27-2 collects, through suction, a predetermined amount of an activation reagent that is for starting coagulation reaction and that is stored in the reagent storage part 23, and discharges the collected activation reagent into a reaction chamber 26 that has been transferred by a transfer part 37 from the heating part 30 to the position 28-2-1 immediately below the reagent suction nozzle 28-2 of the reagent dispenser 27-2. Accordingly, the specimen and the activation reagent are mixed together, whereby coagulation reaction is started. The reagent dispenser 27-2 includes the reagent suction nozzle 28-2 which suctions a reagent in a reagent container held in a reagent holding hole 25, and a guide 29-2 which is a bar-like member having attached thereto the reagent suction nozzle 28-2 whose suction hole is oriented downward. The reagent suction nozzle 28-2 includes a liquid surface sensor (not shown). The reagent suction nozzle 28-2 can be moved in the horizontal direction between one end portion and the other end portion of the guide 29-2 by the stepping motor 29A (see FIG. 4). The reagent suction nozzle 28-2 can be moved in the up-down direction by the stepping motor 29B (see FIG. 4). The one end portion of the guide 29-2 is positioned above the reagent storage part 23, and the other end portion is positioned in the vicinity of the heating part 30 and the sample measurement part 34. In order to allow collection of a reagent from the reagent storage part 23, the reagent dispenser 27-2 is disposed such that the guide 29-2 extends across from the vicinity of the center of the disk-like reagent storage part 23 to the peripheral portion thereof.

The sample measurement part 34 is disposed to the rear of the heating part 30 so as to be adjacent thereto. The sample measurement part 34 applies light to the sample contained in a reaction chamber 26, detects an optical signal, and outputs a digital signal corresponding to the light intensity. The sample measurement part 34 includes a sample holding plate 35, the transfer part 37, and a detector 39 (see FIG. 4). The sample holding plate 35 is a box-shaped member in which a plurality of sample holding holes 36 each for holding a reaction chamber 26 are formed at predetermined intervals. The transfer part 37 includes: a horizontal arm 37-1 expandable in the horizontal direction; a container catcher 37-2 provided at the leading end of the horizontal arm 37-1; and a slide mechanism 37-3 which causes the horizontal arm 37-1 to slide in the left-right direction. The transfer part 37 transfers a reaction chamber 26 held in a holding hole 32 of the heating and holding part 31 of the heating part 30, to a sample holding hole 36 of the sample holding plate 35 via the position 28-2-1 immediately below the reagent suction nozzle 28-2 of the reagent dispenser 27-2.

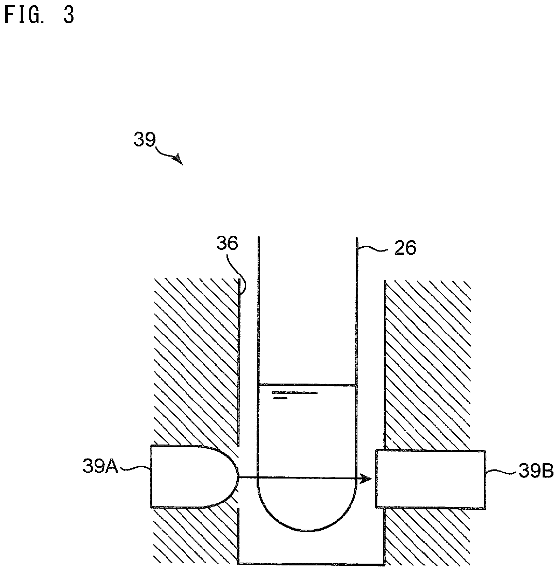

As shown in FIG. 3, the detector 39 includes, in each sample holding hole 36: a light source part 39A which applies light to a sample contained in a reaction chamber 26 held in the sample holding hole 36; and a light receiving part 39B which receives light transmitted through the sample, converts an analog electric signal corresponding to the received light intensity into a digital signal, and outputs the digital signal.

With reference back to FIG. 2, the specimen information reading part 17 is a device that reads specimen information from a specimen information member that stores specimen information. The specimen information reading part 17 is disposed at a position adjacent to the rack transporter 12 so as to be able to read specimen information from a specimen information member added to a specimen container 14 being transported by the rack transporter 12. The specimen information member is a label having printed thereon a machine readable code having specimen information recorded thereon, and the specimen information reading part 17 includes a code reader. The machine readable code is a one-dimensional bar code, and the specimen information reading part 17 is a bar code reader.

FIG. 4 is a block diagram showing a configuration of the measurement unit 2. The measurement unit 2 includes a controller 41, a storage 42, and a communication part 43, and, as shown in FIG. 2, the specimen dispenser 18, the reaction chamber holding part 22, the transfer parts 33, 37, the heating part 30, the reagent storage part 23, the specimen information reading part 17, the reagent dispenser 27, and the detector 39.

The controller 41 is a circuit for controlling operations of the respective parts of the measurement unit 2 and the transport unit 3 in accordance with functions thereof. The controller 41 includes a CPU and peripheral circuits thereof, for example.

The storage 42 includes a hard disk that stores various types of programs, various types of data, and the like to be used when the controller 41 controls the respective parts of the measurement unit 2 and the transport unit 3.

The communication part 43 is a circuit that performs input/output of data with an external device in accordance with control by the controller 41. The communication part 43 includes an interface circuit using a communication standard such as IEEE1394 and Ethernet, for example.

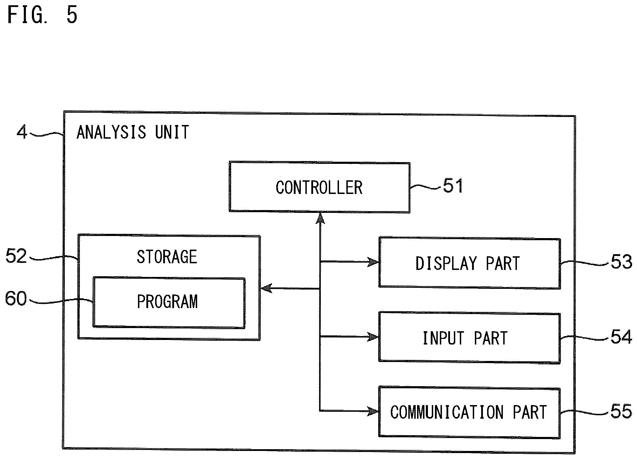

FIG. 5 is a block diagram showing a simplified configuration of the analysis unit 4. The analysis unit 4 includes a controller 51, a storage 52, a display part 53, an input part 54, and a communication part 55.

The controller 51 is a circuit for controlling operations of the respective parts of the analysis unit 4 in accordance with functions thereof. The controller 51 includes a CPU and peripheral circuits thereof, for example.

The storage 52 is a circuit that stores various types of a program 60 and various types of data. Similar to the storage 42, the storage 52 includes a hard disk device. The program 60 is stored in the storage 52.

The program 60 includes a control program, an analysis processing program, a calibration curve processing program, and a quality control program. The control program is a program for controlling respective parts (the storage 52, the display part 53, the input part 54, and the communication part 55) of the analysis unit 4 in accordance with functions thereof. The analysis processing program is a program for executing predetermined processes (setting of reagents, setting of a calibration curve, analysis of measurement results, and the like) regarding specimen measurement. The calibration curve processing program is a program for executing predetermined processes (creation and display of a calibration curve, and the like) regarding standard sample measurement. The quality control program is a program for executing predetermined processes (setting of an execution condition, display of measurement results, and the like) regarding quality control sample measurement.

The display part 53 is a display provided with a computer screen such as a liquid crystal display or an organic EL display. The display part 53 may be provided with a touch panel and may be formed integrally with the input part 54 described later. The display part 53 is connected to the controller 51 through an HDMI or RGB cable. The display part 53 displays, on the computer screen, image data of various types of screens inputted from the controller 51.

The input part 54 is a device that inputs, to the specimen analyzer 1, various commands such as a command that instructs creation of a calibration curve, various types of data necessary for operating the specimen analyzer 1, and the like. The input part 54 includes: a pointing device including a keyboard, a mouse, or a touch panel; a plurality of input switches assigned with predetermined functions; and the like.

The communication part 55 is a circuit that performs input/output of data with an external device including the communication part 43 of the measurement unit 2, in accordance with control by the controller 51. The communication part 55 includes an interface circuit using a communication standard such as IEEE1394 and Ethernet, for example.

### <Operation of specimen analyzer 1>

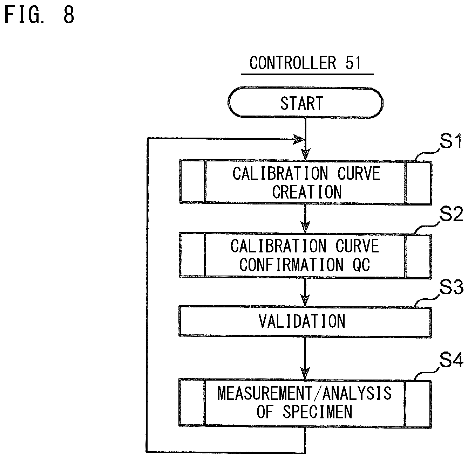

Next, with reference to the flow chart in FIG. 8, an operation flow of the specimen analyzer 1 is described. The process shown in FIG. 8 is realized by the controller 51 of the analysis unit 4 executing the program 60 stored in the storage 52.

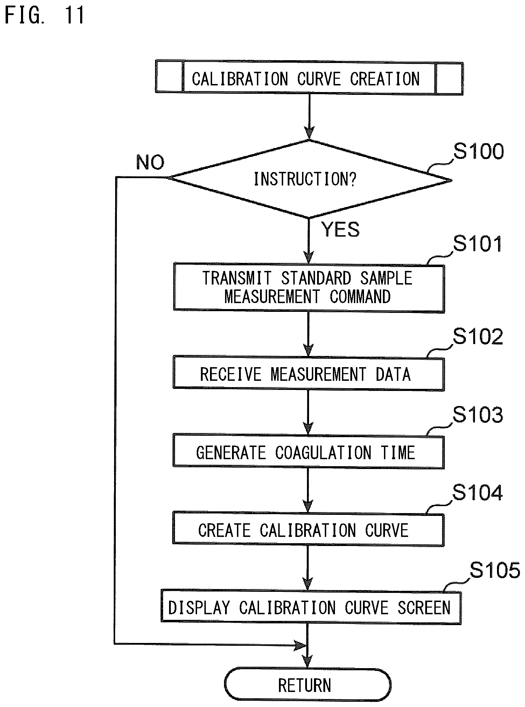

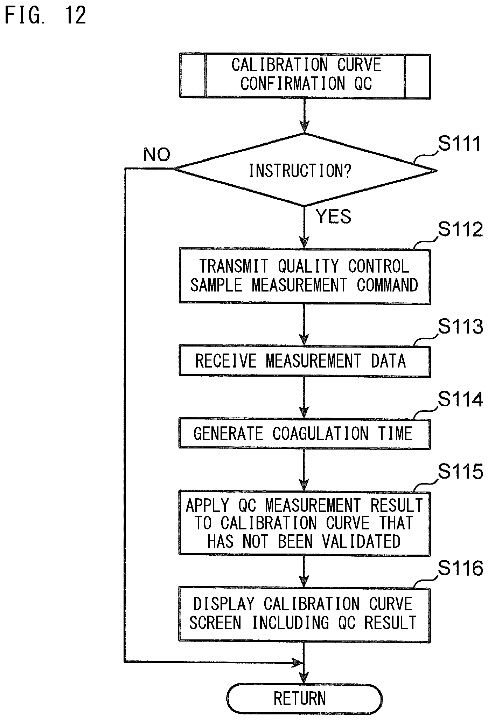

In step S1, the controller 51 executes a calibration curve creation process for creating a calibration curve. Details of the calibration curve creation will be described later with reference to FIG. 11. In step S2, in order to allow the operator to confirm validity of the calibration curve created in step S1, the controller 51 applies, to the calibration curve, a measurement result obtained through measurement of a quality control sample, obtains an analysis result (referred to as "QC result") of the quality control sample, and displays a calibration curve confirmation screen that includes the QC result and the calibration curve. Details of calibration curve confirmation QC will be described later with reference to FIG. 12. In step S3, the controller 51 validates the calibration curve upon reception of an operation by the operator. In step S4, the controller 51 measures and analyzes a specimen using the validated calibration curve.

### <Specimen measurement process>

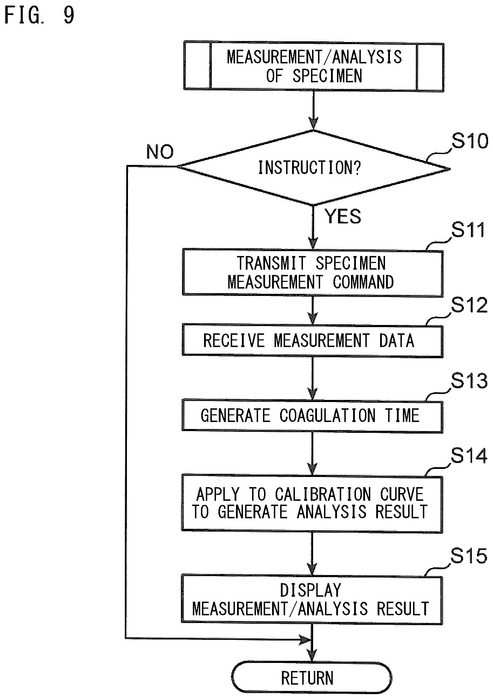

A specimen measurement analysis process in step S4 is described with reference to FIG. 2 to FIG. 7, FIG. 9, and FIG. 10. FIG. 9 is a flow chart showing details of the specimen measurement analysis process. The operator sets, in a rack 15, a specimen container 14 containing a specimen, and sets the rack 15 to the rack setting part 11. When the operator operates the input part 54 and instructs start of measurement, the controller 51 determines, in step S10, that a measurement start instruction has been received (YES in S10). When the measurement start instruction has not been received (NO in S10), the controller 51 returns the process to the main routine in FIG. 8.

In step S11, the controller 51 having received the measurement start instruction transmits a measurement command for measuring the specimen to the controller 41 of the measurement unit 2.

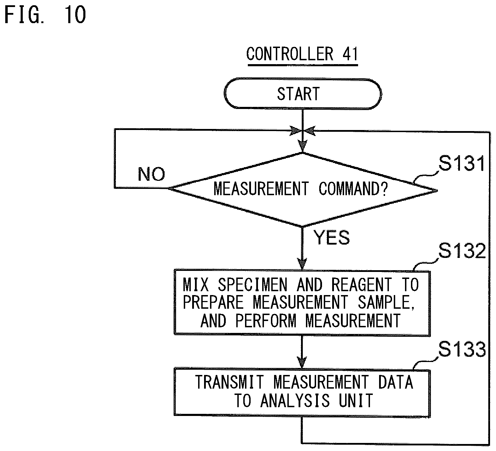

FIG. 10 is a flow chart showing an operation flow of the controller 41 of the measurement unit 2. In step S131, the controller 41 determines whether or not the measurement command has been received from the controller 51 of the analysis unit 4. When the measurement command has not been received (NO in S131), the controller 41 repeats the process of step S131. Upon receiving the specimen measurement command (YES in S131), the controller 41 controls, in step S132, respective parts such that the measurement unit 2 operates as described below, whereby the specimen and a reagent are mixed together to prepare a measurement sample, and the measurement sample is measured. The rack setting part 11 positions, onto the rack transporter 12, the rack 15 having been set at the rack setting part 11. The rack transporter 12 positions, to the specimen suction position 16, the specimen container 14 set in the rack 15. The specimen dispenser 18 collects, through suction, a predetermined amount of the specimen by means of the specimen suction nozzle 19, from the specimen container 14 at the specimen suction position 16, and discharges the specimen into a reaction chamber 26 held in a holding hole 24 of the reaction chamber holding part 22. Accordingly, the specimen in the specimen container 14 is dispensed into the reaction chamber 26. When the specimen has been dispensed into the reaction chamber 26, the reaction chamber holding part 22 rotates, whereby the reaction chamber 26 is transferred to the vicinity of the heating part 30. The transfer part 33 of the heating part 30 transfers the reaction chamber 26 from the holding hole 24 of the reaction chamber holding part 22 to a holding hole 32 of the heating part 30. The heating part 30 heats the reaction chamber 26. The reagent dispenser 27-1 collects, through suction, a predetermined amount of a predetermined reagent from the reagent storage part 23 by means of the reagent suction nozzle 28-1. The transfer part 33 transfers the reaction chamber 26 from the heating and holding part 31 to the position 28-1-1 immediately below a movement path of the reagent suction nozzle 28-1. The reagent dispenser 27-1 moves the reagent suction nozzle 28-1 to above the reaction chamber 26, and discharges the reagent from the reagent suction nozzle 28-1 into the reaction chamber 26. Accordingly, the reagent is dispensed into the reaction chamber 26, the specimen and the reagent are mixed together, whereby a measurement sample is prepared. The transfer part 33 transfers the reaction chamber 26 having the reagent dispensed therein, to a holding hole 32 of the heating part 30. Next, the heating and holding part 31 of the heating part 30 rotates and positions the reaction chamber 26 to the vicinity of the sample measurement part 34. The transfer part 37 of the sample measurement part 34 transfers the reaction chamber 26 from the heating and holding part 31 to the position 28-2-1 immediately below a movement path of the reagent suction nozzle 28-2. The reagent dispenser 27-2 moves the reagent suction nozzle 28-2, and discharges an activation reagent from the reagent suction nozzle 28-2 into the reaction chamber 26. The transfer part 33 transfers the reaction chamber 26 having the activation reagent dispensed therein, to a sample holding hole 36 of the sample measurement part 34.

The light source part 39A of the sample measurement part 34 applies light to the sample contained in the reaction chamber 26 having been transferred to the sample holding hole 36. The light receiving part 39B receives light transmitted through the sample, converts an analog electric signal corresponding to the received light intensity into a digital signal, and outputs the digital signal. Light application by the light source part 39A and light reception by the light receiving part 39B are continuously performed for a predetermined time. The digital signals outputted from the light receiving part 39B are stored in the storage 42 as time series measurement data indicating variation over time of the transmitted light amount.

In step S133, the controller 41 transmits the measurement data (time series data of the transmitted light amount outputted from the light receiving part 39B) stored in the storage 42, to the controller 51 of the analysis unit 4 via the communication part 43. Upon transmitting the measurement data to the controller 51 of the analysis unit 4, the controller 41 of the measurement unit 2 returns the process to S131.

With reference back to FIG. 9, in step S12, the controller 51 of the analysis unit 4 receives via the communication part 55 the measurement data transmitted from the measurement unit 2, and stores the received measurement data into the storage 52.

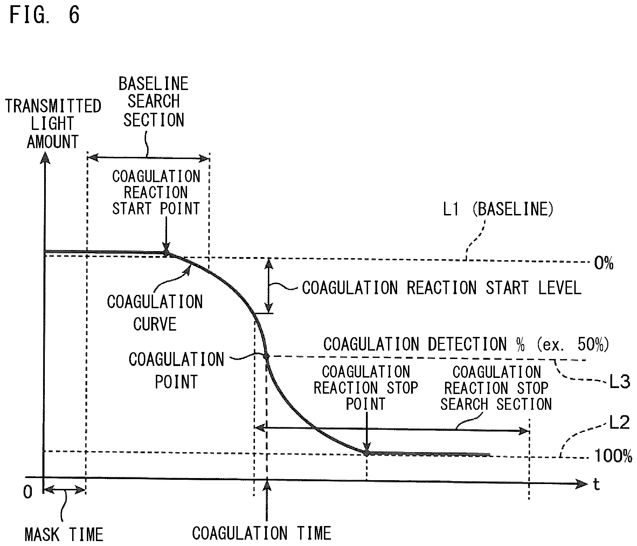

In step S13, the controller 51 of the analysis unit 4 calculates a coagulation time of the specimen on the basis of the received measurement data. FIG. 6 shows a general coagulation curve that is used in calculation of a coagulation time. The vertical axis of the graph in FIG. 6 represents the magnitude of a digital signal, i.e., the transmitted light amount, outputted from the light receiving part 39B. The horizontal axis of the graph in FIG. 6 represents elapsed time from the start of reception by the light receiving part 39B. FIG. 6 shows a percentage detection method as an example of calculation of a coagulation time. The percentage detection method is a method in which a transmitted light amount before progress of coagulation reaction is confirmed, i.e., a baseline L1 is defined as 0%, a transmitted light amount (L2) at the coagulation reaction stop point is defined as 100%, and the time when the transmitted light amount reaches a coagulation detection % is calculated as a coagulation time. The coagulation detection % is set as a value of a predetermined proportion with respect to an interval between the transmitted light amount at the baseline L1 and the transmitted light amount at the coagulation reaction stop point. The coagulation detection % is used in order to search for a coagulation point, which is a point at which the transmitted light amount has varied by about a predetermined proportion (coagulation detection %) from the baseline L1. The coagulation detection % is set to a value that is greater than 0 and smaller than 100. The coagulation detection % is set to 50%, for example. The controller 51 calculates the elapsed time when the coagulation detection % has become 50%, as a coagulation time. The controller 51 stores the calculated coagulation time into the storage 52.

With reference to FIG. 9 again, next, in step S14, the controller 51 of the analysis unit 4 applies the calculated coagulation time to a validated calibration curve stored in the storage 52, and converts the coagulation time to a concentration of a predetermined component contained in the specimen. Prior to the specimen measurement, the calibration curve is created, validated, and stored in the storage 52 in advance.

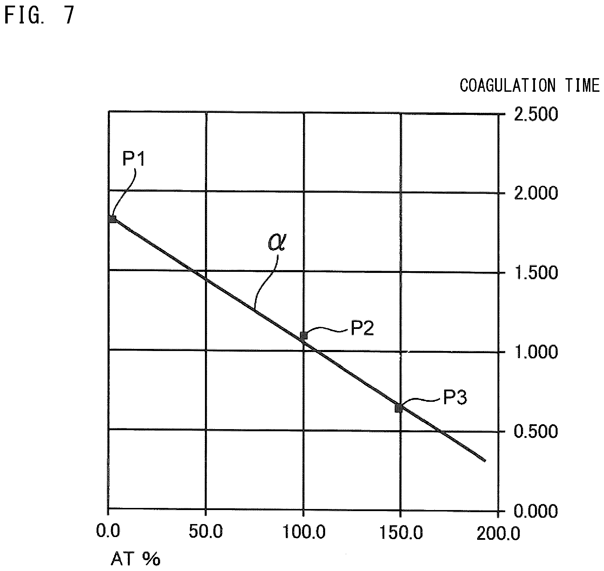

FIG. 7 shows an example of a calibration curve. In FIG. 7, the vertical axis of the graph represents coagulation time, the horizontal axis represents concentration of antithrombin (AT), which is an example of the predetermined component, and a line α is a calibration curve. The calibration curve is given as an approximation representing the relationship between coagulation time as the measurement result obtained through measurement of a specimen, and the concentration of a target component. Therefore, when a coagulation time is obtained through measurement of a specimen, if the coagulation time is applied to a calibration curve, the concentration of the component corresponding to the coagulation time is determined.

With reference to FIG. 9 again, in step S15, the controller 51 displays, on the display part 53, the coagulation time as the measurement result, and a concentration conversion value as the analysis result obtained in step S12.

### <Calibration curve creation process>

With reference to FIG. 11, the calibration curve creation process in step S1 in FIG. 8 is described. For creation of a calibration curve, a standard sample for which the concentration of a target component is known is used. The standard sample is a sample that contains a component having a known concentration, and a commercially available standard human plasma is suitably used. Prior to measurement of the standard sample, the operator inputs, to the analysis unit 4 via the input part 54, the name and lot number of the standard sample, a measurement item, a reagent lot set, and the number of measurements and target concentrations of the standard sample. Next, the operator sets, instead of a specimen container 14, a container containing the standard sample to a rack 15, and sets the rack 15 to the rack setting part 11 of the measurement unit 2. The operator inputs an instruction of calibration curve creation via the input part 54.

In step S100, the controller 51 determines whether or not an instruction of calibration curve creation has been received. When the instruction has not been received (NO in S100), the controller 51 returns the process to the main routine in FIG. 8. When the instruction has been received (YES in S100), the controller 51 transmits, in step S101, a standard sample measurement command for causing the measurement unit 2 to dilute the standard sample, mix the standard sample with a reagent, thereby preparing a measurement sample, and measure the measurement sample.

Operation of the measurement unit 2 having received the standard sample measurement command is the same as the operation described with reference to FIG. 10, except that the standard sample is measured instead of the specimen. Upon receiving the measurement command, the controller 41 of the measurement unit 2 controls the rack setting part 11 to position the rack 15 onto the rack transporter 12. The controller 41 drives the rack transporter 12 to position, to the specimen suction position 16, the container containing the standard sample and set in the rack 15.

The controller 41 drives the specimen dispenser 18 to collect, through suction by means of the specimen suction nozzle 19, a predetermined amount of the standard sample from the container at the specimen suction position 16, and to discharge the standard sample into a reaction chamber 26 held in a holding hole 24 of the reaction chamber holding part 22. For creation of a calibration curve, it is necessary to measure a plurality of samples obtained by diluting the standard sample to different concentrations. Therefore, the standard sample is dispensed into the same number of reaction chambers 26 as the number of measurements of the standard sample inputted by the operator prior to the measurement.

The controller 41 controls the specimen dispenser 18 to suction the diluent from the diluent container held in the diluent holding hole 38, and to discharge the diluent into the reaction chambers 26 having the standard sample dispensed therein. The amount of the diluent to be dispensed is determined by the controller 51 on the basis of the known concentration of the component to be measured that is contained in the standard sample, and each target concentration inputted by the operator. Specifically, the storage 52 of the analysis unit 4 has stored therein the concentration of the component contained in the standard sample in association with the lot number. The controller 51 calculates the amount of the diluent necessary for causing the known concentration stored in the storage 52 to become the target concentration inputted by the operator, and causes the specimen dispenser 18 to dispense the necessary amount of the diluent. Accordingly, a plurality of standard samples diluted to different concentrations are produced.

Thereafter, in accordance with the procedure similar to the specimen measurement process described above, the reagent dispenser 27-1 dispenses the reagent into the reaction chambers 26 to prepare measurement samples, the heating part 30 heats the measurement samples, and the detector 39 measures the measurement samples. The controller 41 stores, into the storage 42, measurement data obtained through the measurement, and transmits the measurement data to the controller 51 of the analysis unit 4.

In step S102, the controller 51 of the analysis unit 4 receives, via the communication part 55, the measurement data transmitted from the measurement unit 2, and stores the received measurement data into the storage 52.

In step S103, on the basis of the measurement data, the controller 51 calculates a coagulation time for each of the plurality of standard samples, and stores the coagulation times as measurement results into the storage 52.

In step 104, as in FIG. 7, the controller 51 plots, on a graph, a plurality of points (P1, P2, P3) at each of which the coagulation time obtained through measurement of the standard sample and the target concentration (i.e., the component concentration in the diluted standard sample) of the standard sample cross each other. Then, the controller 51 creates an approximate line based on these plots as a calibration curve α, and stores the calibration curve α together with calibration curve information into the storage 52. The calibration curve information includes the day and time of creation of the calibration curve, information (calibrator name, lot number, expiration date) of the standard sample used in the calibration curve creation, information of the reagent lot set used in the calibration curve creation, and the measurement condition and the measurement results of the standard sample.

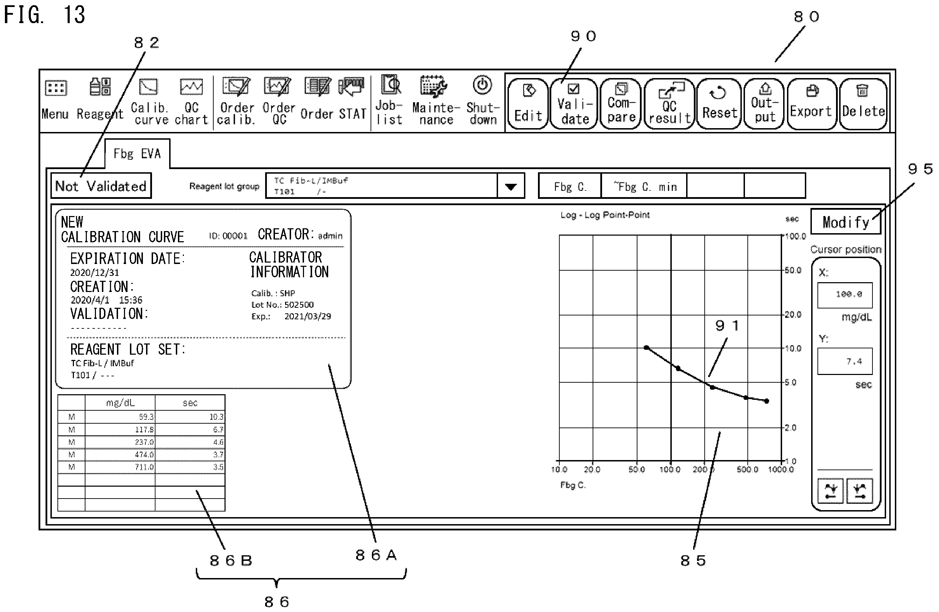

In step S105, the controller 51 displays, on the display part 53, the calibration curve stored in the storage 52. FIG. 13 shows a calibration curve screen 80 displayed on the display part 53. As shown in FIG. 13, a graph display region 85 in which a calibration curve 91 is displayed in the form of a graph, and a calibration curve information region 86 in which information about the calibration curve is displayed, are displayed on the calibration curve screen 80.

The controller 51 creates a graph of the target calibration curve 91 on the basis of data of the calibration curve read out from the storage 52, and as shown in FIG. 13, disposes the graph in the graph display region 85 in the calibration curve screen 80. The horizontal axis (X axis) of the graph represents concentration, and the vertical axis (Y axis) represents coagulation time (measurement result). In the graph, in addition to a straight line or curve representing the calibration curve 91, point data of the plurality of measurement samples corresponding to the plurality of standard samples having different concentrations measured at the time of calibration curve creation is displayed as plots.

The controller 51 displays, in the calibration curve information region 86 in the calibration curve screen 80, the calibration curve information read out from the storage 52. As shown in FIG. 13, the region 86 includes a region 86A for displaying attribution information of the calibration curve, and a region 86B for displaying the measurement results of the standard sample used in creation of the calibration curve. The attribution information of the calibration curve displayed in the region 86A includes the calibration curve ID, creator information, the expiration date of the calibration curve, the day and time of creation of the calibration curve, information of the standard sample used in the calibration curve creation, and information of the lot of the reagent used in the calibration curve creation. The region 86B includes measurement results (coagulation times) at a plurality of measurement points, and component concentrations after the standard sample has been diluted. In the example shown in FIG. 13, attribution information about the calibration curve that is immediately after being created and that has not been validated (Not Validated) is displayed in the region 86A. However, the information in the region 86A may be masked until the calibration curve is validated, and only the information of the measurement results may be displayed in the region 86B.

The calibration curve screen 80 includes a status region 82 for displaying the status of the calibration curve. FIG. 13 is an example of a screen on which a calibration curve before being validated is displayed, and "Not Validated" indicating that the calibration curve is the one before being validated is displayed in the status region 82. When the calibration curve 91 has been validated, "Validated" is displayed in the status region 82.

The operator confirms, on the calibration curve screen 80 shown in FIG. 13, validity of the calibration curve 91 by examining, for example, the shape or linearity of the graph of the calibration curve 91 displayed in the region 85, appropriateness of numerical values of the measurement results displayed in the region 86, and the like. When the operator has determined that the calibration curve 91 can be used in specimen measurement, the operator can validate the calibration curve 91 that has not been validated, by operating a "validate" button 90 displayed in an upper portion of the screen. Meanwhile, in a case where the operator wishes to measure a quality control sample before validation and confirm validity of the calibration curve 91 on the basis of the measurement result of the quality control sample, the operator can perform calibration curve confirmation QC described later.

When validity of the calibration curve 91 cannot be confirmed, such as when the shape of the calibration curve is not appropriate, the operator can correct the measurement points of the calibration curve 91 by operating a "modify" button 95. Correction of the calibration curve is disclosed in US Patent Publication No. 2020-0103428, the disclosed content of which is incorporated herein by reference.

### <Calibration curve confirmation QC process>

FIG. 12 is a flow chart of a calibration curve confirmation QC process executed in step S2 in FIG. 8. In the calibration curve confirmation QC, a quality control sample is used. The quality control sample is a specimen that contains an analysis target component having a known concentration, and, in the present embodiment, is a control plasma in which the amount of a component related to blood coagulation has been adjusted. As the control plasma, COAGTROL N manufactured by Sysmex Corporation is suitably used. With respect to the quality control sample, a target value, an upper limit value, and a lower limit value are set for each lot of the quality control sample by the manufacturer. When a result obtained by measuring and analyzing the quality control sample is compared with the above-described values, the quality of measurement and analysis by the specimen analyzer 1 can be examined.

In a case where the calibration curve confirmation QC is to be executed, the operator inputs, prior to the measurement of a quality control sample, the name and lot number of the quality control sample, a measurement item, and the reagent lot set, to the analysis unit 4 via the input part 54. The operator sets, instead of a specimen container 14, a container containing the quality control sample to a rack 15, sets the rack 15 to the rack setting part 11, and instructs, via the input part 54, execution of the calibration curve confirmation QC.

In step S111, the controller 51 determines whether or not an instruction of execution of the calibration curve confirmation QC has been received from the operator via the input part 54. When the instruction has been received (YES in S111), the controller 51 transmits, in step S112, a measurement command for measuring the quality control sample to the controller 41 of the measurement unit 2. Upon receiving the measurement command, the controller 41 of the measurement unit 2 executes measurement of the quality control sample according to a procedure similar to that described with reference to FIG. 10. Upon completion of the measurement, measurement data of the quality control sample is transmitted from the measurement unit 2 to the controller 51 of the analysis unit 4. In step S113, the controller 51 receives the measurement data of the quality control sample, and stores the measurement data into the storage 52. In step S114, on the basis of the measurement data of the quality control sample, the controller 51 calculates a coagulation time, which is a measurement result, and stores the coagulation time into the storage 52.

In step S115, the controller 51 applies the QC result (the coagulation time of the quality control sample) to a calibration curve 91 that has not been validated, and performs concentration conversion, thereby generating an analysis result. The controller 51 stores the generated analysis result into the storage 52.

In step S116, the controller 51 displays, on the display part 53, a calibration curve screen 801 including the result of the calibration curve confirmation QC. Here, an example in which the calibration curve screen 801 is automatically displayed on the display part 53 immediately after step S115, is shown. However, a configuration may be adopted in which the screen is transitioned to the calibration curve screen in response to an instruction from the operator.

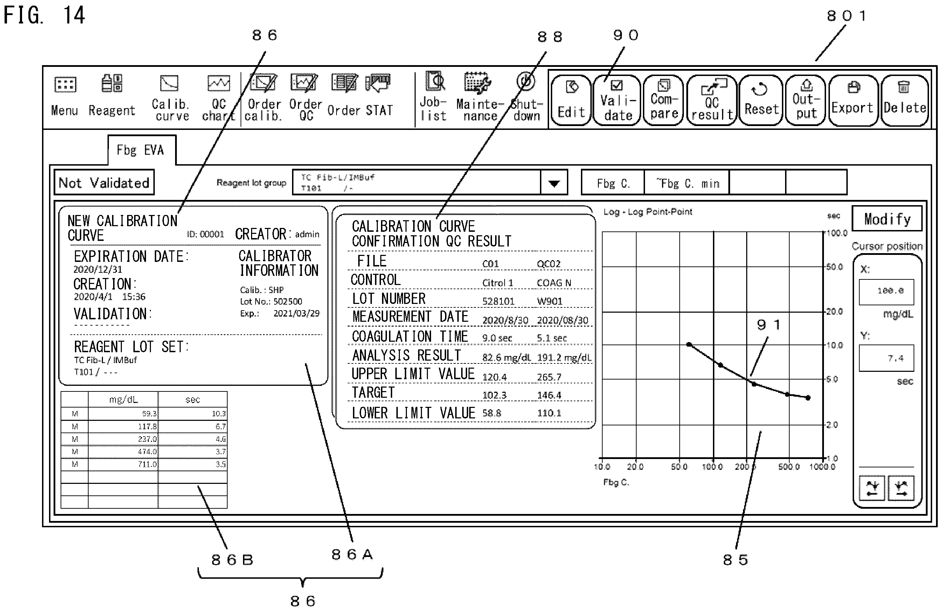

FIG. 14 shows the calibration curve screen 801 displayed after execution of the calibration curve confirmation QC. As shown in FIG. 14, on the calibration curve screen 801 after execution of the calibration curve confirmation QC, a QC result region 88 for displaying the analysis result of the calibration curve confirmation QC is displayed in addition to the calibration curve information region 86. The region 88 includes (1) coagulation time, (2) analysis result, (3) upper limit value, (4) target value, and (5) lower limit value. The coagulation time is the coagulation time calculated on the basis of the measurement data obtained by measuring the quality control sample in the measurement unit 2. The analysis result is a concentration conversion value obtained by applying the coagulation time of the quality control sample to the target calibration curve 91, and, in the example shown in FIG. 14, is a fibrinogen concentration. The target value, the upper limit value, and the lower limit value are respectively the target value (known concentration) of the predetermined component contained in the quality control sample, and the upper limit value and the lower limit value that define an allowable range on the basis of the target value. The target value, the upper limit value, and the lower limit value are stored in advance in the storage 52 in association with the lot number of the quality control sample.

The operator can determine whether or not the target calibration curve can be validated, by referring to the graph of the calibration curve 91 and the QC result displayed in the region 88, which are being simultaneously displayed on the screen. Specifically, the operator confirms whether or not the linearity of the calibration curve 91 is sufficient and whether or not each point of the calibration curve 91 is shifted, on the basis of the shape of the graph of the calibration curve 91. Further, on the basis of the calibration curve confirmation QC displayed in the region 88, the operator confirms whether or not the value of the analysis result is in the allowable range defined by the upper limit value and the lower limit value of the quality control sample. In the example in FIG. 14, the analysis result of the quality control sample (Citrol 1) having a low concentration is 82.6 mg/dL, and is in the allowable range between the upper limit value of 120.4 mg/dL and the lower limit value of 58.8 mg/dL. The analysis result of the quality control sample (COAG N) having a high concentration is 191.2 mg/dL, and is in the allowable range defined by the upper limit value of 265.7 mg/dL and the lower limit value of 110.1 mg/dL. Therefore, by confirming the information in the region 88, the operator can confirm that the calibration curve 91 provides appropriate concentration conversion. In a case where the analysis result in the region 88 is outside the allowable range, an indication that the QC result is outside the allowable range may be provided on the screen shown in FIG. 14. For example, the analysis result may be displayed in a different color, e.g., in red. In still another example, an alert message such as "The QC result exceeds the allowable range" may be displayed, or a letter or a symbol indicating that the QC result is outside the allowable range may be displayed.

The operator can determine not only whether the QC result is in the allowable range, but can also determine whether or not the calibration curve can be validated, on the basis of the magnitude of divergence obtained through comparison of the analysis result of the quality control sample with the target value.

The operator may compare not only the analysis result with the upper limit value, the lower limit value, and the target value, but may also determine whether the calibration curve confirmation QC itself was appropriately performed. In the example in FIG. 14, the coagulation time, which is the measurement result of the quality control sample, is also displayed in the region 88. The coagulation time is the measurement result of the quality control sample before being applied to the target calibration curve 91. If the value of the coagulation time is not appropriate, there is a possibility that the analysis result, which is based on the coagulation time, does not become an appropriate value. In the example in FIG. 14, in addition to the analysis result of the quality control sample, the coagulation time before the measurement result of the quality control sample is applied to the calibration curve is simultaneously displayed. Therefore, the operator can determine validity of the calibration curve 91 after determining whether the measurement result itself of the quality control sample is reliable.

### <Validation>

With reference to FIG. 8 again, in step S3, when the target calibration curve is to be validated, the operator operates, via the input part 54, the "validate" button 90 displayed on the calibration curve screen 801. Upon receiving the operation of the "validate" button 90 on the screen in FIG. 14, the controller 51 adds, to the data of the target calibration curve, a flag indicating that the calibration curve has been validated, and stores information of the target calibration curve into the storage 52. In addition, the controller 51 changes "Not Validated" in the status display region on the screen in FIG. 14 to "Validated". Once the calibration curve has been validated, in a case where measurement of the same item is performed thereafter by using the reagent lot set registered together with the calibration curve information, conversion of a measurement result (coagulation time) to an analysis result is performed by using the validated calibration curve.

As described above, in the present embodiment, the graph of the calibration curve 91 and the region 86B displaying the measurement results of the standard sample, and the calibration curve confirmation QC result are displayed on the same screen 801. Therefore, confirmation of the calibration curve 91 and confirmation of the calibration curve confirmation QC result can be performed on the same screen. Further, the work of validating the calibration curve 91 can also be completed on the calibration curve screen 801. Therefore, after confirming the calibration curve 91, the operator need not, in order to confirm the QC result, open another screen, e.g., a QC chart screen, from the calibration curve screen 801 to confirm the QC result, and then, open the calibration curve screen 801 again to validate the calibration curve 91. Thus, the operator need not go back and forth between screens. Therefore, the work of examining validity of the calibration curve 91 on the basis of the QC result can be efficiently performed.

### <Modification 1>

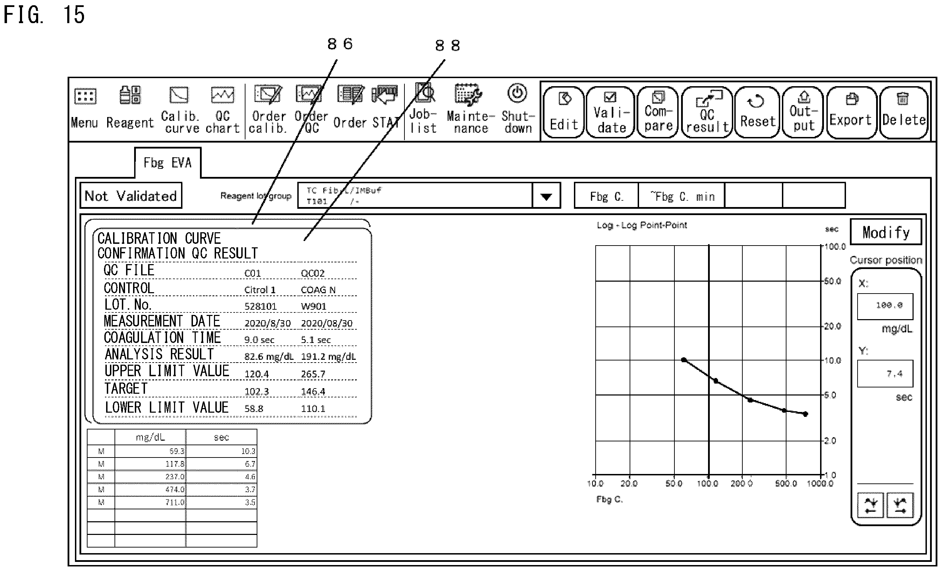

FIG. 15 shows a second example of the calibration curve screen 80. In the example shown in FIG. 14, the region 86 for displaying the calibration curve information and the region 88 for displaying the calibration curve confirmation QC result are displayed so as to be arranged next to each other on a single screen. However, as shown in FIG. 15, the region 86 and the region 88 may be displayed so as to partially overlap each other, and either of the region 86 and the region 88 may be selectively displayed on the front side in accordance with an operation performed on the screen. Alternatively, a button for switching the display between the region 86 and the region 88 may be provided on the screen. Still alternatively, the region 86 and the region 88 may be switched upon reception of an operation of a predetermined key (e.g., a Tab key) of the keyboard. When the region 86 and the region 88 are configured to be selectively displayed, information that can be displayed in each region can be increased, and information in each region can be displayed in an enlarged manner, whereby the visibility of the display can be increased.

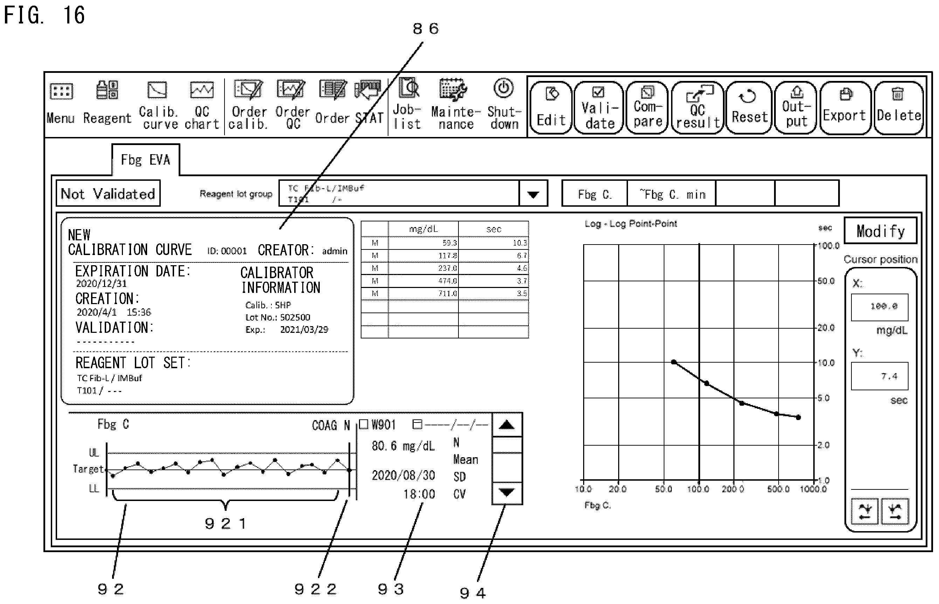

FIG. 16 shows a third example of the calibration curve screen 80. In this example, instead of the region 88 shown in FIG. 14, a QC chart 92 is provided. In the QC chart 92, in a case where QC sample measurement was performed a plurality of times in the past with respect to the same reagent lot set and the same measurement item as those of the target calibration curve, a plurality of QC results 921 corresponding to the plurality of times of the QC sample measurement and a result 922 of the calibration curve confirmation QC are arrayed in time series. In the QC chart 92, the vertical axis represents the analysis result (fibrinogen concentration in the example in FIG. 16), and the horizontal axis represents time series. In the QC chart, the closer to the right end, the newer the data is, and the data of the calibration curve confirmation QC 922 is plotted on the right-most side. In the QC chart 92, lines representing an upper limit value (UL) and a lower limit value (LL) of the quality control sample are displayed, and a line representing a target value is displayed at the center position in the vertical axis. Next to the QC chart 92, a region 93 for displaying the result of the calibration curve confirmation QC using the target calibration curve is provided. In the region 93, (1) the analysis result by the calibration curve confirmation QC (in the example in FIG. 16, fibrinogen concentration of the quality control sample), (2) day and time of measurement, (3) the number N of QC results managed and plotted on the QC chart, (4) mean value of QC results, (5) standard deviation, and (6) coefficient of variation are displayed. In a case where calibration curve confirmation QC of a plurality of quality control samples have been performed with respect to the target calibration curve 91, a scroll bar 94 is displayed next to the QC chart, and a QC chart of another quality control sample can be displayed through operation of the scroll bar 94.

In the example shown in FIG. 16, the result 922 of the calibration curve confirmation QC is displayed together with the upper limit value, the lower limit value, and the target value. Accordingly, the operator can visually understand whether the result of the calibration curve confirmation QC is in the allowable range defined by the upper limit and the lower limit, or whether divergence from the target value is in the allowable range. Further, since the QC results 921 based on the past calibration curves and the result of the calibration curve confirmation QC of this time are arranged in time series, the operator can confirm whether the result of the calibration curve confirmation QC of this time is significantly diverged when compared with the QC results using the past calibration curves. Even in a case where the QC result using the target calibration curve is in the allowable range defined by the upper limit value and the lower limit value, if a trend in which the QC result using the target calibration curve is significantly different from the QC results using the past calibration curves is shown, the continuity of the analysis result may be impaired. Therefore, displaying the QC results based on past calibration curves and the QC result based on the target calibration curve so as to be arranged next to each other as in FIG. 16 is useful when the operator determines whether or not correction of the calibration curve is necessary or determines whether the calibration curve can be validated. In addition, since statistical information such as the mean value and the standard deviation of the past QC results is displayed, the operator can perform comparison with the past QC results on the basis of not only the visual information but also the statistical information.

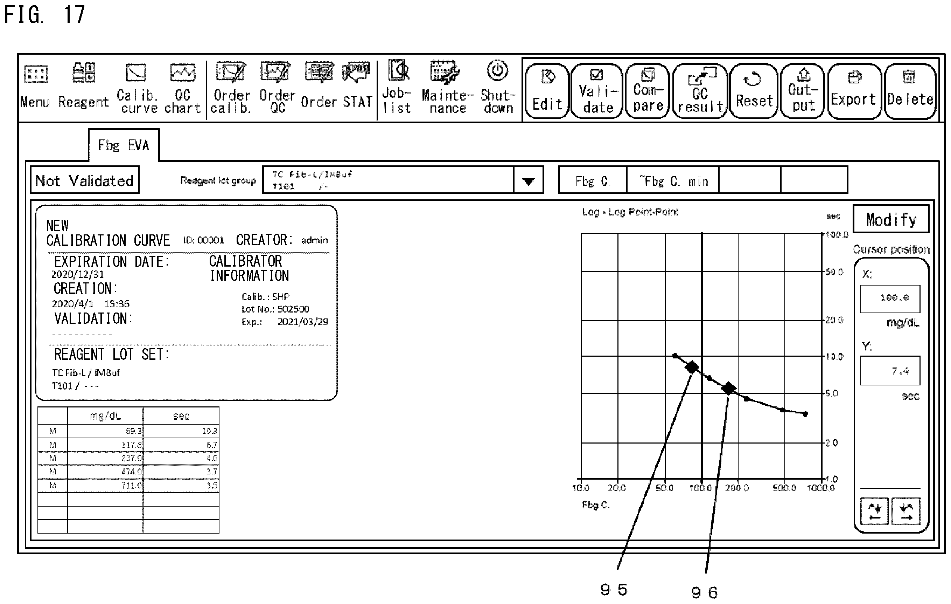

FIG. 17 shows a fourth example of the calibration curve screen 80. In this example, instead of the calibration curve confirmation QC result region 88, a plurality of point data corresponding to the calibration curve confirmation QC result are plotted as points 95, 96 on the graph in the graph display region 85. The point 95 is point data of the analysis result corresponding to a QC sample having a low concentration and the point 96 is point data of the analysis result corresponding to a QC sample having a high concentration. In this example, the operator can simultaneously refer to the graph of the calibration curve 91, the calibration curve information, and the QC result.

In the example in FIG. 17, when the result of the calibration curve confirmation QC is outside the range of allowable values of the corresponding quality control sample, the data plot is displayed in an emphasized manner. Examples of the display in an emphasized manner include change in the color of the plot and display of an exclamation mark. Accordingly, the operator can refer to the result of the calibration curve confirmation QC together with the graph at the same time, and can also determine whether or not the result of the calibration curve confirmation QC is appropriate.

According to the specimen analyzer 1 and the calibration curve display method according to the present embodiment, with respect to the calibration curve screen 80 displayed on the display part 53, the calibration curve and the QC result are included in the same screen. Therefore, the operator need not perform the work of switching screens in order to confirm these pieces of information. As a result, for confirmation of validity of a calibration curve, the work of confirming the calibration curve can be made easy and efficient.

The calibration curve screens 80 in FIGS. 14 to 17 each include the "validate" button 90 for receiving an operation of validating the calibration curve. Therefore, after confirming validity of the calibration curve, the operator can validate the calibration curve, without the need of switching the calibration curve screen 80 to another screen.

The calibration curve screens 80 of FIGS. 14 to 17 each include attribution information of the calibration curve in addition to the calibration curve confirmation QC result. Therefore, even when, in order to confirm validity of the calibration curve, the operator wishes to confirm attribution information of the calibration curve, e.g., the expiration date of the standard sample or the point data of the standard sample, the operator can confirm such information without switching the screens.

According to the calibration curve screen 80 shown in FIG. 15, the calibration curve confirmation QC result and the attribution information of the calibration curve are displayed so as to be switchable in accordance with an operation by the operator. Therefore, the display area of each piece of data displayed on the screen can be increased, whereby the visibility is improved.

The calibration curve screens 80 in FIGS. 14 to 17 each include an upper limit value and a lower limit value for the calibration curve confirmation QC result. Therefore, the operator can easily confirm whether the calibration curve confirmation QC result is in the allowable range.

The calibration curve screens 80 in FIGS. 14 to 17 each include a target value for the calibration curve confirmation QC result. Therefore, the operator can easily confirm how much the calibration curve confirmation QC result deviates from the target value.

The calibration curve screen 80 in FIG. 16 includes a time series display of a plurality of quality control results obtained in the past, in addition to the calibration curve confirmation QC result. Therefore, the operator can confirm validity of the calibration curve after confirming continuity of data with respect to the past QC results.

The calibration curve screen 80 in FIG. 17 includes the graph of the calibration curve 91 and quality control results plotted on the graph. Therefore, the operator can confirm the result of the calibration curve confirmation QC on the graph.

In order to express the present disclosure, the present disclosure has been appropriately and fully described using an embodiment with reference to the drawings. However, a person skilled in the art should understand that modification and/or improvement of the embodiment described above can be easily realized. Therefore, as long as the modification or the improvement performed by a person skilled in the art does not depart from the scope of rights according to the claims, the modification or the improvement is construed to be included in the scope of rights according to the claims.

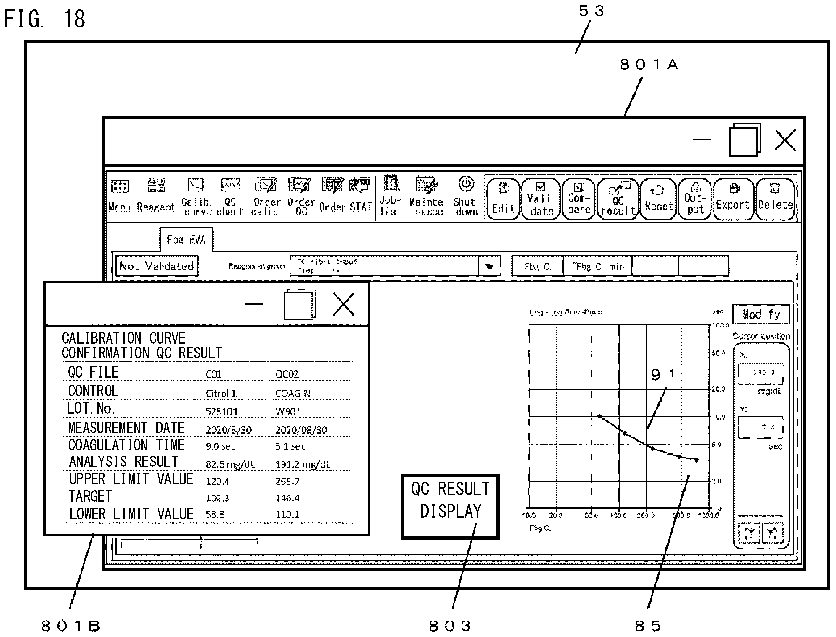

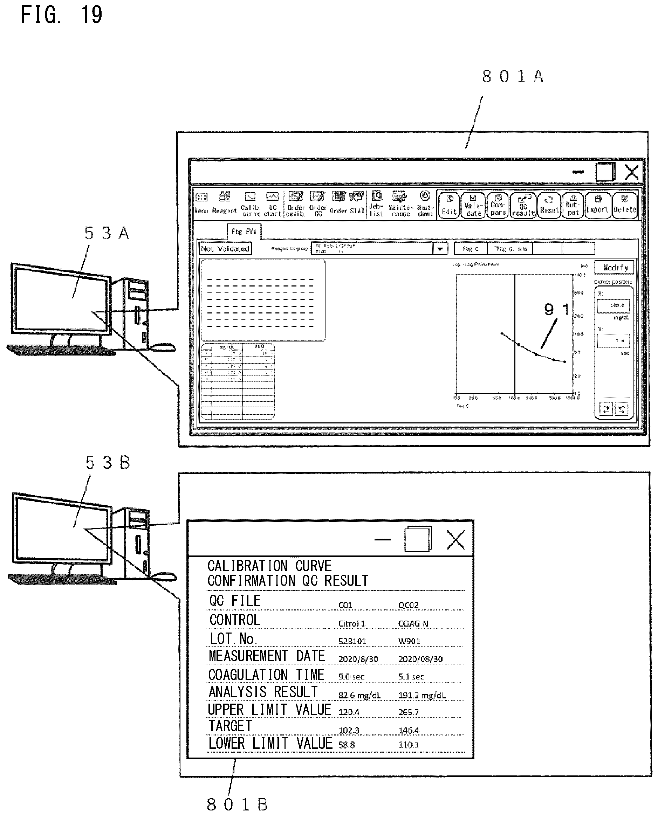

In the embodiment described above, an example in which the calibration curve and the calibration curve confirmation QC result are displayed in the calibration curve screen 801 has been shown. However, a "screen that includes a calibration curve and a quality control result" in the present disclosure is not limited to this example, and as long as the calibration curve and the quality control result can be simultaneously displayed in one or a plurality of computer screens, such screens are included in the category of the "screen" according to the present disclosure. FIG. 18 shows another of example of display. As shown in FIG. 18, in the computer screen (displayable area) of the display part 53, a screen 801A for displaying the calibration curve 91 and a screen 801B for displaying a calibration curve confirmation QC result may be divided as separate windows so as to be simultaneously displayed. In this display configuration as well, the operator can simultaneously confirm the calibration curve 91 and the calibration curve confirmation QC result. In this case, a QC result display button 803 is provided to a window 801A for displaying the calibration curve, and in response to operation of the button 803, a window 801B may be displayed in a pop-up manner. FIG. 19 shows still another example of display. As shown in FIG. 19, the specimen analyzer 1 may be provided with a plurality of display parts 53A, 53B, and the screen 801A for the calibration curve 91 and the screen 801B for the calibration curve confirmation QC result may be simultaneously displayed on the respective computer screens.

In the embodiment described above, an example of a blood coagulation analyzer has been shown. However, the present disclosure may be applied to another specimen analyzer that uses a calibration curve, such as an immuno analyzer, a biochemical analyzer, or a nucleic acid analyzer. For example, in a case where the present disclosure is applied to an immuno analyzer, a measurement unit sends, to an analysis unit, digital conversion values of light amounts that each correspond to the amount of a predetermined antigen/antibody contained in a standard sample for which the concentration of the antigen/antibody is known, and the analysis unit creates a calibration curve having two axes of the digital conversion value of the light amount and the known concentration of the antigen/antibody.

In the embodiment described above, the analysis unit 4 and the measurement unit 2 are provided with the controllers 51, 41, respectively. Not limited to this example, the controllers 51, 41 may be configured as a single controller (CPU). This also applies to the storages 52, 42 and the communication parts 55, 43. The analysis unit 4 may be implemented as a notebook or desktop computer externally connected to the specimen analyzer 1.

In the embodiment described above, an example in which the display part 53 is provided to the analysis unit 4, which is a separate computer connected to the measurement unit 2, has been described. However, the display part 53 may be incorporated in the measurement unit 2.

### DESCRIPTION OF THE REFERENCE CHARACTERS

1 specimen analyzer
2 measurement unit
52 storage
53 display part
80 calibration curve screen
85 graph display region
86 calibration curve information region
86A, 86B, 88 region
91 calibration curve
92 QC chart
93, 94 point

## Claims

1. A calibration curve display method comprising:
measuring a standard sample that contains a known concentration of a component, and creating a calibration curve before being validated, based on a measurement result of the standard sample and the known concentration of the component in the standard sample;
measuring a quality control sample that contains a component having a known concentration, and obtaining a quality control result representing a concentration of the component in the quality control sample by converting a measurement result of the quality control sample into concentration based on the calibration curve before being validated; **characterized in that** the method further comprises:
displaying a screen including the calibration curve before being validated and the quality control result, wherein
the screen includes a button for receiving an operation of validating a calibration curve; and
upon receiving an operation of validating a calibration curve via the button, registering the calibration curve before being validated that has been displayed on the screen, as a calibration curve to be used in measurement of a specimen.

2. The method of claim 1, further comprising
displaying, on the screen, information of the measurement result of the standard sample obtained for creating the calibration curve before being validated.

3. The method of claim 1 or 2, further comprising
displaying the quality control result and the information of the measurement result of the standard sample so as to be switchable in accordance with an operation by an operator.

4. The method of any one of claims 1 to 3, further comprising
displaying, on the screen, an upper limit value and a lower limit value for the quality control result.

5. The method of any one of claims 1 to 4, further comprising
displaying, on the screen, a target value for the quality control result.

6. The method of any one of claims 1 to 5, further comprising
displaying, on the screen, in addition to the quality control result, a plurality of quality control results obtained in the past in a time series.

7. The method of any one of claims 1 to 5, further comprising
displaying a graph of the calibration curve before being validated and the quality control result plotted on the graph.

8. The method of any one of claims 1 to 6, wherein
the screen that includes the calibration curve before being validated and the quality control result is displayed on a same computer screen.

9. The method of any one of claims 1 to 6, wherein
the screen that includes the calibration curve before being validated and the quality control result is to be simultaneously displayed into a plurality of computer screens.

10. An analyzer comprising:
a measurement unit that measures a standard sample that contains a known concentration of a component and that is for creating a calibration curve, and a quality control sample that contains a component having a known concentration;
a controller; and
a computer screen, wherein
the controller is programmed to
create a calibration curve before being validated, on the basis of a measurement result of the standard sample by the measurement unit and the known concentration of the component contained in the standard sample,
obtain a quality control result representing a concentration of the component contained in the quality control sample by converting a measurement result of the quality control sample by the measurement unit into concentration based on the calibration curve before being validated; **characterized in that** the controller is further programmed to
display, on the computer screen, a screen including the calibration curve before being validated and the quality control result,
wherein
the screen includes a button for receiving an operation of validating a calibration curve,
wherein the controller is further programmed to register, upon receiving an operation of validating a calibration curve via the button, the calibration curve before being validated that has been displayed on the screen, as a calibration curve to be used in measurement of a specimen.

11. The analyzer of any one of claim 10, wherein the controller is further programmed to display, on the screen, information of the measurement result of the standard sample obtained for creating the calibration curve before being validated.

## Patentansprüche

1. Verfahren zum Anzeigen einer Kalibrierungskurve, umfassend:
Messen einer Standardprobe, die eine bekannte Konzentration einer Komponente enthält, und Erstellen einer Kalibrierungskurve vor deren Validierung basierend auf einem Messergebnis der Standardprobe und der bekannten Konzentration der Komponente in der Standardprobe;
Messen einer Qualitätskontrollprobe, die eine Komponente enthält, die eine bekannte Konzentration aufweist, und Erhalten eines Qualitätskontrollergebnisses, das eine Konzentration der Komponente in der Qualitätskontrollprobe darstellt, durch Umrechnen eines Messergebnisses der Qualitätskontrollprobe in Konzentration basierend auf der Kalibrierungskurve vor deren Validierung;
**dadurch gekennzeichnet, dass** das Verfahren weiter Folgendes umfasst:
Anzeigen eines Bildschirms, der die Kalibrierungskurve vor deren Validierung und das Qualitätskontrollergebnis einschließt, wobei
der Bildschirm eine Schaltfläche zum Empfangen einer Operation zur Validierung einer Kalibrierungskurve einschließt; und
nach Empfangen einer Operation zur Validierung einer Kalibrierungskurve über die Schaltfläche, Registrieren der Kalibrierungskurve vor deren Validierung, die auf dem Bildschirm angezeigt wurde, als eine Kalibrierungskurve, die bei der Messung eines Musters zu verwenden ist.

2. Verfahren nach Anspruch 1, weiter umfassend
Anzeigen, auf dem Bildschirm, von Informationen des Messergebnisses der Standardprobe, das zum Erstellen der Kalibrierungskurve vor deren Validierung erhalten wurde.

3. Verfahren nach Anspruch 1 oder 2, weiter umfassend
Anzeigen des Qualitätskontrollergebnisses und der Informationen des Messergebnisses der Standardprobe so, dass sie gemäß einer Operation durch einen Bediener umschaltbar sind.

4. Verfahren nach einem der Ansprüche 1 bis 3, weiter umfassend
Anzeigen, auf dem Bildschirm, eines oberen Grenzwerts und eines unteren Grenzwerts für das Qualitätskontrollergebnis.

5. Verfahren nach einem der Ansprüche 1 bis 4, weiter umfassend
Anzeigen, auf dem Bildschirm, eines Zielwerts für das Qualitätskontrollergebnis.

6. Verfahren nach einem der Ansprüche 1 bis 5, weiter umfassend
Anzeigen, auf dem Bildschirm, zusätzlich zu dem Qualitätskontrollergebnis, einer Vielzahl von Qualitätskontrollergebnissen, die in der Vergangenheit erhalten wurden, in einer Zeitreihe.

7. Verfahren nach einem der Ansprüche 1 bis 5, weiter umfassend
Anzeigen einer Graphik der Kalibrierungskurve vor deren Validierung und des Qualitätskontrollergebnisses auf der Graphik eingezeichnet.

8. Verfahren nach einem der Ansprüche 1 bis 6, wobei
der Bildschirm, der die Kalibrierungskurve vor deren Validierung und das Qualitätskontrollergebnis einschließt, auf einem gleichen Computerbildschirm angezeigt wird.

9. Verfahren nach einem der Ansprüche 1 bis 6, wobei
der Bildschirm, der die Kalibrierungskurve vor deren Validierung und das Qualitätskontrollergebnis einschließt, gleichzeitig auf einer Vielzahl von Computerbildschirmen anzuzeigen ist.

10. Analysator, umfassend:
eine Messeinheit, die eine Standardprobe misst, die eine bekannte Konzentration einer Komponente enthält und die zum Erstellen einer Kalibrierungskurve dient, und eine Qualitätskontrollprobe, die eine Komponente enthält, die eine bekannte Konzentration aufweist;
eine Steuereinheit; und
einen Computerbildschirm, wobei
die Steuereinheit so programmiert ist, dass sie
eine Kalibrierungskurve vor deren Validierung auf der Grundlage eines Messergebnisses der Standardprobe durch die Messeinheit und der bekannten Konzentration der in der Standardprobe enthaltenen Komponente erstellt,
ein Qualitätskontrollergebnis, das eine Konzentration der in der Qualitätskontrollprobe enthaltenen Komponente darstellt, durch Umrechnen eines Messergebnisses der Qualitätskontrollprobe durch die Messeinheit in Konzentration basierend auf der Kalibrierungskurve vor deren Validierung erhält; **dadurch gekennzeichnet, dass** die Steuereinheit weiter so programmiert ist, dass sie
auf dem Computerbildschirm einen Bildschirm anzeigt, der die Kalibrierungskurve vor deren Validierung und das Qualitätskontrollergebnis einschließt,
wobei
der Bildschirm eine Schaltfläche zum Empfangen einer Operation zur Validierung einer Kalibrierungskurve einschließt,
wobei die Steuereinheit weiter so programmiert ist, dass sie nach Empfangen einer Operation zur Validierung einer Kalibrierungskurve über die Schaltfläche die Kalibrierungskurve vor deren Validierung, die auf dem Bildschirm angezeigt wurde, als eine Kalibrierungskurve registriert, die bei der Messung eines Musters zu verwenden ist.

11. Analysator nach Anspruch 10, wobei die Steuereinheit weiter so programmiert ist, dass sie auf dem Bildschirm Informationen des Messergebnisses der Standardprobe anzeigt, das zum Erstellen der Kalibrierungskurve vor deren Validierung erhalten wurde.

## Revendications

1. Procédé d'affichage de courbe d'étalonnage comprenant :
la mesure d'un échantillon étalon qui contient une concentration connue d'un composant, et la création d'une courbe d'étalonnage avant validation, sur la base d'un résultat de mesure de l'échantillon étalon et de la concentration connue du composant dans l'échantillon étalon ;
la mesure d'un échantillon de contrôle qualité qui contient un composant ayant une concentration connue, et l'obtention d'un résultat de contrôle qualité représentant une concentration du composant dans l'échantillon de contrôle qualité en convertissant un résultat de mesure de l'échantillon de contrôle qualité en concentration sur la base de la courbe d'étalonnage avant validation ;
**caractérisé en ce que** le procédé comprend en outre :
l'affichage d'un écran incluant la courbe d'étalonnage avant validation et le résultat de contrôle qualité, dans lequel
l'écran inclut un bouton pour recevoir une opération de validation d'une courbe d'étalonnage ; et
à la réception d'une opération de validation d'une courbe d'étalonnage via le bouton, l'enregistrement de la courbe d'étalonnage avant validation qui a été affichée sur l'écran, en tant que courbe d'étalonnage à utiliser pour la mesure d'un spécimen.

2. Procédé selon la revendication 1, comprenant en outre
l'affichage, sur l'écran, d'informations sur le résultat de mesure de l'échantillon étalon obtenu pour la création de la courbe d'étalonnage avant validation.

3. Procédé selon la revendication 1 ou la revendication 2, comprenant en outre
l'affichage du résultat de contrôle qualité et des informations sur le résultat de mesure de l'échantillon étalon de manière à pouvoir être commuté conformément à une opération d'un opérateur.

4. Procédé selon l'une quelconque des revendications 1 à 3, comprenant en outre
l'affichage, sur l'écran, d'une valeur limite supérieure et d'une valeur limite inférieure pour le résultat de contrôle qualité.

5. Procédé selon l'une quelconque des revendications 1 à 4, comprenant en outre
l'affichage, sur l'écran, d'une valeur cible pour le résultat de contrôle qualité.

6. Procédé selon l'une quelconque des revendications 1 à 5, comprenant en outre
l'affichage, sur l'écran, en plus du résultat de contrôle qualité, d'une pluralité de résultats de contrôle qualité obtenus dans le passé dans une série chronologique.

7. Procédé selon l'une quelconque des revendications 1 à 5, comprenant en outre
l'affichage d'un graphique de la courbe d'étalonnage avant validation et du résultat de contrôle qualité tracé sur le graphique.

8. Procédé selon l'une quelconque des revendications 1 à 6, dans lequel
l'écran qui inclut la courbe d'étalonnage avant validation et le résultat de contrôle qualité est affiché sur un même écran d'ordinateur.

9. Procédé selon l'une quelconque des revendications 1 à 6, dans lequel
l'écran qui inclut la courbe d'étalonnage avant validation et le résultat de contrôle qualité est à afficher simultanément sur une pluralité d'écrans d'ordinateur.

10. Analyseur comprenant :
une unité de mesure qui mesure un échantillon étalon qui contient une concentration connue d'un composant et qui sert à créer une courbe d'étalonnage, et un échantillon de contrôle qualité qui contient un composant ayant une concentration connue ;
un dispositif de commande ; et
un écran d'ordinateur, dans lequel
le dispositif de commande est programmé pour
créer une courbe d'étalonnage avant validation, sur la base d'un résultat de mesure de l'échantillon étalon par l'unité de mesure et de la concentration connue du composant contenu dans l'échantillon étalon,
obtenir un résultat de contrôle qualité représentant une concentration du composant contenu dans l'échantillon de contrôle qualité en convertissant un résultat de mesure de l'échantillon de contrôle qualité par l'unité de mesure en concentration sur la base de la courbe d'étalonnage avant validation ; **caractérisé en ce que** le dispositif de commande est en outre programmé pour :
afficher, sur l'écran d'ordinateur, un écran incluant la courbe d'étalonnage avant validation et le résultat de contrôle qualité,
dans lequel
l'écran inclut un bouton pour recevoir une opération de validation d'une courbe d'étalonnage,
dans lequel le dispositif de commande est en outre programmé pour enregistrer, lors de la réception d'une opération de validation d'une courbe d'étalonnage via le bouton, la courbe d'étalonnage avant validation qui a été affichée sur l'écran, en tant que courbe d'étalonnage à utiliser pour la mesure d'un spécimen.

11. Analyseur selon la revendication 10, dans lequel le dispositif de commande est en outre programmé pour afficher, sur l'écran, des informations sur le résultat de mesure de l'échantillon étalon obtenu pour créer la courbe d'étalonnage avant validation.
